# DEMANDE DE BREVET EUROPEEN

(11) **EP 1 739 567 A1**
(43) Date de publication de la demande: **03.01.2007**
(21) Numéro de dépôt: 06116383.8
(22) Date de dépôt: 30.06.2006
(51) Int. Cl.: G06F 13/16

(54) **Dispositif d'arbitrage asynchrone et microcontrôleur comprenant un tel dispositif d'arbitrage**

(30) Priorité: 01.07.2005 FR 0507105
(71) Demandeur: ATMEL NANTES SA, 44306 Nantes Cédex 3 (FR)
(72) Inventeur: BIRSAN, Laurentiu, 44340 Bouguenais (FR)
(74) Mandataire: Guéné, Patrick Lucien Juan Joseph

(57) **Abrégé**

L'invention concerne un dispositif d'arbitrage (51), destiné à être connecté entre d'une part un premier (52) et un second module (53) et d'autre part des moyens de mémorisation (54) formant un espace mémoire. Ce dispositif d'arbitrage comprend : des moyens de détection d'une ou plusieurs requêtes provenant, simultanément ou non, des premier et second modules en vue de l'accès à l'espace mémoire ; des moyens de sélection, générant un signal de sélection prenant un premier état, par défaut ou si une requête détectée seule provient du premier module ou encore si deux requêtes sont détectées simultanément, ou un second état, si une requête détectée seule provient du second module ou si l'une de deux requêtes détectées simultanément a déjà été servie ; des premiers moyens d'horloge, activés si le signal de sélection prend le premier état, et générant un premier signal d'horloge permettant aux moyens de mémorisation de servir une requête provenant du premier module ; des premiers moyens de réinitialisation, activés si le signal de sélection prend le premier état, et générant un premier signal de réinitialisation permettant d'effacer une requête provenant du premier module après qu'elle a été servie ; des seconds moyens d'horloge, activés si le signal de sélection prend le second état, et générant un second signal d'horloge permettant aux moyens de mémorisation de servir une requête provenant du second module ; des seconds moyens de réinitialisation, activés si le signal de sélection prend le second état, et générant un second signal de réinitialisation, permettant d'effacer une requête provenant du second module après qu'elle a été servie.

## Description

### 1. Domaine de l'invention

Le domaine de l'invention est celui des circuits électroniques.

Plus précisément, l'invention concerne un dispositif d'arbitrage, destiné à être connecté entre d'une part un premier et un second module et d'autre part des moyens de mémorisation formant un espace mémoire.

D'une façon générale, l'invention peut s'appliquer dans tous les cas où deux modules écrivent/lisent dans un même espace mémoire.

Cet espace mémoire est par exemple réalisé sous la forme d'une mémoire synchrone de type SRAM (pour « Static RAM » en anglais, ou « mémoire vive statique » en français) ou d'un registre (par exemple une bascule D numérique, aussi appelée DFF, pour « Digital Flip Flop » en anglais).

L'invention s'applique notamment, mais non exclusivement, dans le cas où les premier et second modules sont respectivement une unité centrale (ou CPU, pour « Central Processing Unit » en anglais) et un bloc IP d'un microcontrôleur.

On rappelle que les blocs IP (pour « Intellectual Property » en anglais, ou « Propriété Intellectuelle » en français), réalisés sous forme logicielle et/ou matérielle, sont des contrôleurs (aussi appelés périphériques) intégrés dans des microcontrôleurs (contrôleur USB (pour « Universal Serial Bus » en anglais), contrôleur CAN (pour « Controller Area Network » en anglais), etc).

L'invention s'applique particulièrement, mais non exclusivement, dans toutes les implémentations qui utilisent aujourd'hui des mémoires DPRAM (pour « dual port RAM » en anglais, ou « RAM à double port » en français), dans lesquelles il est possible d'accéder simultanément par les deux ports.

### 2. Art antérieur

Dans le contexte précité, où deux modules écrivent/lisent dans un même espace mémoire, on connaît aujourd'hui deux techniques distinctes.

Une première technique connue consiste à utiliser une mémoire DPRAM. Cette première technique connue est quasiment nécessaire quand les premier et second modules sont respectivement une unité centrale (CPU) et un contrôleur (bloc IP) très rapides, tel qu'un contrôleur USB par exemple. Dans ces cas, les accès CPU et les accès du contrôleur (USB par exemple) sont desservis simultanément, sans attente.

Une seconde technique connue consiste à utiliser une mémoire SRAM avec un mécanisme de « vol de cycle » (aussi appelé mécanisme d'attente). Cette seconde technique connue est plus adaptée au cas où les premier et second modules sont respectivement une unité centrale (CPU) et un contrôleur (bloc IP) plus lent, tel qu'un contrôleur CAN par exemple. Quand des accès simultanés sont détectés, le mécanisme d'attente est mis en oeuvre (envoi d'un signal d'attente « wait » par la mémoire SRAM ou par un dispositif d'arbitrage placé entre la mémoire SRAM et les premier et second modules), pour faire attendre soit le CPU, soit le contrôleur, pendant toute la durée d'un cycle d'horloge de la mémoire SRAM De façon classique, l'horloge de la mémoire SRAM est exprimée soit dans la base de temps du premier module (par exemple la CPU), soit dans celle du second module (par exemple un contrôleur). En d'autres termes, le signal d'horloge reçu en entrée de la mémoire SRAM provient du premier ou du second module.

Les deux techniques connues précitées présentent des avantages et des inconvénients.

Les DPRAM, sont certes très efficaces, car il n'y a pas de conflits en cas d'accès simultané. Leur inconvénient majeur est la taille (à peu près le double d'une mémoire SRAM pour une capacité équivalente) et, surtout, la forte dépendance technologique. On peut en effet encore trouver des technologies qui ne proposent pas de DPRAM.

L'avantage des SRAM est leur taille plus faible par rapport aux DPRAM et surtout, il n'y a certainement pas une dépendance technologique. Leur inconvénient est le fait d'imposer une attente soit au CPU soit au contrôleur, pour que des accès simultanés soient desservis. De plus, si un mécanisme d'attente n'a pas été prévu, il faut doubler la fréquence pour pouvoir desservir deux requêtes, avec des conséquences sur la consommation du système.

Il est à noter que dans une variante de la seconde technique, l'espace mémoire est réalisé sous la forme d'un registre au lieu d'une mémoire SRAM. Les avantages et inconvénients de cette variante sont sensiblement les mêmes que ceux de la seconde technique connue (avec mémoire SRAM).

### 3. Objectifs de l'invention

L'invention a notamment pour objectif de pallier ces différents inconvénients de l'état de la technique.

Plus précisément, l'un des objectifs de la présente invention, dans au moins un mode de réalisation, est de fournir un dispositif d'arbitrage permettant de bénéficier des avantages des mémoires SRAM (ou des registres), tout en ne nécessitant aucun mécanisme d'attente du type précité (attente pendant toute la durée d'un cycle d'horloge) ni aucun doublement de la fréquence d'horloge.

L'invention a également pour objectif, dans au moins un mode de réalisation, de fournir un tel dispositif d'arbitrage qui permette de remplacer une mémoire DPRAM par une simple mémoire SRAM ou un registre, le dispositif d'arbitrage choisissant entre des requêtes (potentiellement simultanées) provenant d'un premier module (« côté A ») ou d'un second module (« côté B »). L'idée est de pouvoir garder une interface DPRAM, c'est-à-dire, à partir des mêmes signaux que ceux utilisés pour accéder à une mémoire DPRAM, générer des accès type SRAM.

Un autre objectif de l'invention, dans au moins un mode de réalisation, est de fournir un tel dispositif d'arbitrage pouvant être utilisés aussi bien dans des systèmes synchrones que dans des systèmes asynchrones.

Un objectif complémentaire de l'invention, dans au moins un mode de réalisation, est de fournir un tel dispositif d'arbitrage qui soit simple à mettre en oeuvre et peu coûteux.

### 4. Exposé de l'invention

Ces différents objectifs, ainsi que d'autres qui apparaîtront par la suite, sont atteints selon l'invention à l'aide d'un dispositif d'arbitrage, destiné à être connecté entre d'une part un premier et un second module et d'autre part des moyens de mémorisation formant un espace mémoire. Selon l'invention, le dispositif d'arbitrage comprend :
- des moyens de détection d'une ou plusieurs requêtes provenant, simultanément ou non, des premier et second modules en vue de l'accès à l'espace mémoire ;
- des moyens de sélection, générant un signal de sélection (accesA_accesB) prenant :
   * un premier état, par défaut ou si une requête détectée seule provient du premier module ou encore si deux requêtes sont détectées simultanément ;
   * un second état, si une requête détectée seule provient du second module ou si l'une de deux requêtes détectées simultanément a déjà été servie ;
- des premiers moyens d'horloge, activés si le signal de sélection prend le premier état, et générant un premier signal d'horloge (clk_a) permettant aux moyens de mémorisation de servir une requête provenant du premier module ;
- des premiers moyens de réinitialisation, activés si le signal de sélection prend le premier état, et générant un premier signal de réinitialisation (rst_a) permettant d'effacer une requête provenant du premier module après qu'elle a été servie ;
- des seconds moyens d'horloge, activés si le signal de sélection prend le second état, et générant un second signal d'horloge (clk_b) permettant aux moyens de mémorisation de servir une requête provenant du second module ;
- des seconds moyens de réinitialisation, activés si le signal de sélection prend le second état, et générant un second signal de réinitialisation (rst_b), permettant d'effacer une requête provenant du second module après qu'elle a été servie.

Le principe général de l'invention consiste donc à prévoir un dispositif d'arbitrage qui génère son propre signal d'horloge (premier ou second signal d'horloge précité), pour chaque requête provenant du premier ou second module. Ainsi, la technique de l'invention peut être utilisée dans un système synchrone (cas où les premier et second blocs fournissent chacun un signal d'horloge) comme dans un système asynchrone (cas où les premier et second blocs ne fournissent pas de signal d'horloge).

En outre, le dispositif d'arbitrage selon l'invention génère des premier et second signaux de réinitialisation permettant de gérer deux requêtes simultanées de façon optimale. En effet, l'une des deux requêtes simultanées est servie puis effacée, de façon que l'autre requête puisse être servie et effacée à son tour. Il est important de noter que le dispositif d'arbitrage selon l'invention fonctionne de manière asynchrone, ce qui permet de traiter successivement les deux requêtes reçues simultanément, sans attendre un nouveau cycle d'horloge de la mémoire SRAM (contrairement au mécanisme d'attente de l'art antérieur, décrit ci-dessus). Comme déjà indiqué ci-dessus, on rappelle que le signal d'horloge reçu en entrée de la mémoire SRAM provient du premier ou du second module.

On notera que le dispositif d'arbitrage selon l'invention est générique. Il n'est pas dédié uniquement aux applications conçues pour des mémoires DPRAM. Il peut être utilisé dans toute application où deux modules doivent accéder, simultanément ou non, à un même espace mémoire.

De façon avantageuse, les moyens de mémorisation comprennent au moins une mémoire SRAM.

Selon une variante avantageuse, les moyens de mémorisation comprennent au moins un registre.

Préférentiellement, les moyens de détection comprennent :
- une première bascule D, dont l'entrée d'horloge reçoit un signal d'autorisation d'écriture (we_a) provenant du premier module ;
- une deuxième bascule D, dont l'entrée d'horloge reçoit un signal de lecture (rd_a) provenant du premier module, ou obtenu par combinaison d'un signal d'autorisation de sortie (oe_a) et un signal d'autorisation de mémoire (me_a) provenant du premier module ;
- une troisième bascule D, dont l'entrée d'horloge reçoit un signal d'autorisation d'écriture (we_b) provenant du second module ;
- une quatrième bascule D, dont l'entrée d'horloge reçoit un signal de lecture (rd_b) provenant du second module, ou obtenu par combinaison d'un signal d'autorisation de sortie (oe_b) et un signal d'autorisation de mémoire (me_b) provenant du second module ;

En outre, le premier signal de réinitialisation (rst_a) permet de réinitialiser les première et deuxième bascule, et le second signal de réinitialisation (rst_b) permet de réinitialiser les troisième et quatrième bascules.

De façon préférentielle, chacune des première, deuxième, troisième et quatrième bascules possède une entrée D à l'état « 1 » et une sortie non inversée dont l'état initial est « 0 », ou possède une entrée D à l'état « 0 » et une sortie inversée dont l'état initial après inversion est « 0 ». En outre, les moyens de sélection comprennent :
- une première porte OU, recevant en entrée les signaux de sortie des première et deuxième bascules ;
- une deuxième porte OU, recevant en entrée les signaux de sortie des troisième et quatrième bascules ;
- une première porte ET dont une entrée inversée reçoit le signal de sortie de la première porte OU et une entrée non inversée reçoit le signal de sortie de la deuxième porte OU ;
- une cinquième bascule D, dont l'entrée d'horloge reçoit le signal de sortie de la première porte ET, et qui possède une entrée D à l'état « 1 » et une sortie non inversée dont l'état initial est « 0 », ou possède une entrée D à l'état « 0 » et une sortie inversée dont l'état initial après inversion est « 0 », le signal de sortie de la cinquième bascule constituant ledit signal de sélection (accesA_accesB) dont les premier et second états sont « 0 » et « 1 » respectivement.

En outre, le second signal de réinitialisation (rst_b) permet de réinitialiser la cinquième bascule.

Avantageusement, les premiers, respectivement seconds, moyens d'horloge comprennent :
- une porte de filtrage qui, à la condition que le signal de sélection (accesA_accesB) prenne le premier, respectivement second, état, laisse passer un signal de requête (rqst_a, rqst_b) prenant l'état « 1 » pour indiquer qu'une requête provenant du premier, respectivement second, module a été détectée ;
- un premier élément de retard, recevant en entrée le signal de sortie de la porte de filtrage ;
- un deuxième élément de retard, recevant en entrée le signal de sortie du premier élément de retard ;
- une deuxième porte ET dont une entrée inversée reçoit le signal de sortie du deuxième élément de retard et une entrée non inversée reçoit le signal de sortie du premier élément de retard, et générant en sortie ledit premier, respectivement second, signal d'horloge (clk_a, clk_b).

Selon une caractéristique avantageuse, les premiers, respectivement seconds, moyens de réinitialisation partagent ladite porte de filtrage et lesdits premier et deuxième éléments de retard avec les premiers, respectivement seconds, moyens d'horloge. Les premiers, respectivement seconds, moyens de réinitialisation comprennent en outre :
- un troisième élément de retard, recevant en entrée le signal de sortie du deuxième élément de retard ;
- une troisième porte ET dont une entrée inversée reçoit le signal de sortie du troisième élément de retard et une entrée non inversée reçoit le signal de sortie du deuxième élément de retard, et générant en sortie ledit premier, respectivement second, signal de réinitialisation (rst_a, rst_b).

De façon préférentielle, les premier et second éléments de retard appliquent ensemble un retard total cumulé supérieur ou égal à la période (TCC) minimale d'horloge avec laquelle peuvent fonctionner les moyens de mémorisation.

Préférentiellement, le second élément de retard applique un retard supérieur ou égal au temps de maintien (TCQ) avec lequel peuvent fonctionner les moyens de mémorisation.

De façon avantageuse, le dispositif d'arbitrage comprend en outre une troisième porte OU, recevant en entrée les premier et second signaux d'horloge (clk_a, clk_b), et générant en sortie un troisième signal d'horloge (clk) pour les moyens de mémorisation.

Avantageusement, le dispositif d'arbitrage comprend en outre :
- une sixième bascule D, dont l'entrée D est destinée à recevoir un premier signal de données de sortie (do) provenant des moyens de mémorisation, et dont l'entrée d'horloge reçoit le premier signal d'horloge (clk_a), et qui génère en sortie un second signal de données de sortie (do_a) destiné au premier module ;
- une septième bascule D, dont l'entrée D est destinée à recevoir ledit premier signal de données de sortie (do) provenant des moyens de mémorisation, et dont l'entrée d'horloge reçoit le second signal d'horloge (clk_b), et qui génère en sortie un troisième signal de données de sortie (do_b) destiné au second module.

De façon avantageuse, le dispositif d'arbitrage comprend en outre au moins un moyen de multiplexage, chaque moyen de multiplexage étant tel que :
- il permet de fournir un signal de contrôle distinct aux moyens de mémorisation ;
- il reçoit en entrée un premier signal de contrôle provenant du premier module et un second signal de contrôle provenant du second module ;
- il est commandé par ledit signal de sélection (accesA_accesB) de sorte que :
   * si le signal de sélection prend le premier état, le moyen de multiplexage génère en sortie ledit premier signal de contrôle ;
   * si le signal de sélection prend le second état, le moyen de multiplexage génère en sortie ledit second signal de contrôle.

Avantageusement, ledit signal de contrôle appartient au groupe comprenant : un signal d'adresse (addr), un signal de données d'entrée (di), un signal d'autorisation d'écriture (we), un signal d'autorisation de sortie (oe), un signal d'autorisation de mémoire (me) et un signal de lecture (rd).

Dans un mode de réalisation particulier de l'invention, les premier et second modules sont respectivement une unité centrale (CPU) et un bloc IP d'un microcontrôleur.

L'invention concerne également un microcontrôleur comprenant un dispositif d'arbitrage selon l'invention, tel que précité.

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 montre les signaux d'entrée/sortie d'une mémoire DPRAM connue de l'art antérieur ;
- la figure 2 montre les signaux d'entrée/sortie d'une mémoire SPRAM connue de l'art antérieur ;
- la figure 3 présente les chronogrammes des signaux d'entrée/sortie d'une mémoire SPRAM, lors d'un accès en lecture, selon l'art antérieur ;
- la figure 4 présente les chronogrammes des signaux d'entrée/sortie d'une mémoire SPRAM, lors d'un accès en écriture, selon l'art antérieur ;
- la figure 5 présente un synoptique d'un premier mode de réalisation particulier de l'invention, dans lequel le dispositif d'arbitrage permet d'interfacer deux modules avec une mémoire SRAM ;
- la figure 6 présente un synoptique d'un second mode de réalisation particulier de l'invention, dans lequel le dispositif d'arbitrage permet d'interfacer deux modules avec un registre ;
- la figure 7 présente un schéma d'implémentation matérielle d'un mode de réalisation particulier d'une première partie du dispositif d'arbitrage selon l'invention, dans le contexte de la figure 5 ;
- la figure 8 présente un schéma d'implémentation matérielle d'un mode de réalisation particulier d'une deuxième partie du dispositif d'arbitrage selon l'invention, dans le contexte de la figure 5 ;
- la figure 9 présente un schéma d'implémentation matérielle d'un mode de réalisation particulier d'une troisième partie du dispositif d'arbitrage selon l'invention, dans le contexte de la figure 5 ;
- la figure 10 présente une variante du schéma de la figure 9, dans le contexte de la figure 6 ;
- la figure 11 présente des chronogrammes de signaux illustrant le traitement par le dispositif d'arbitrage selon l'invention d'une requête provenant d'un premier module, dans le contexte de la figure 5 ;
- la figure 12 présente des chronogrammes de signaux illustrant le traitement par le dispositif d'arbitrage selon l'invention d'une requête provenant d'un second module, dans le contexte de la figure 5 ; et
- la figure 13 présente des chronogrammes de signaux illustrant le traitement par le dispositif d'arbitrage selon l'invention de deux requêtes simultanées provenant des premier et second modules, dans le contexte de la figure 5.

### 6. Description détaillée

Sur toutes les figures du présent document, les éléments identiques sont désignés par une même référence numérique.

L'invention concerne donc un dispositif d'arbitrage (aussi appelé arbitre), destiné à être connecté entre d'une part un premier et un second module et d'autre part des moyens de mémorisation formant un espace mémoire.

Avant de présenter en détail un mode de réalisation particulier du dispositif d'arbitrage selon l'invention, on rappelle tout d'abord quelques notions relatives aux mémoires DPRAM et SRAM.

Les DPRAM comme les SRAM effectuent les opération de lecture/écriture d'une manière synchrone. Ainsi, toute requête n'est prise en compte que sur le front montant de l'horloge. Pour les DPRAM, il y a une horloge de chaque côté, donc les accès se font d'une manière indépendante.

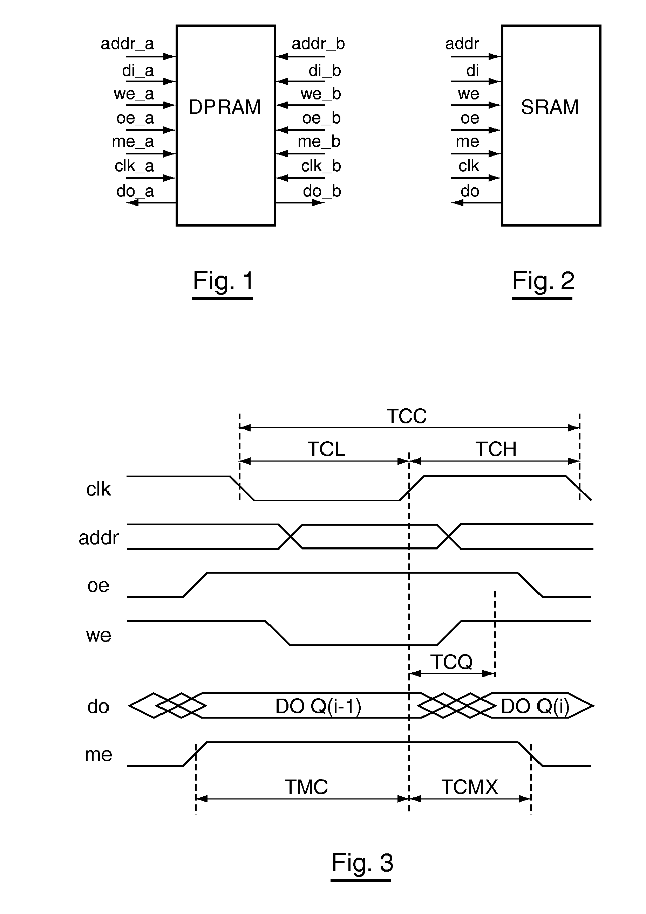

La **figure 1** montre les signaux d'entrées/sorties d'une DPRAM et la **figure 2** ceux d'une SRAM. La nature et le rôle de chacun de ces signaux est brièvement rappelé ci-après.

Le signal de données de sortie (aussi appelé « Data output bus », ou bus de sortie) est référencé do_a et do_b sur la figure 1 et do sur la figure 2. Ce bus de sortie est contrôlé par le signal « Output enable » (oe_a, oe_b, ou oe). Quand le signal « Output enable » est à 1, sur le bus de sortie on trouve la valeur de la mémoire de l'adresse spécifiée par le bus d'adresse (addr_a, addr_b ou addr). Quand le signal « Output enable » est à 0, le bus de sortie (data output bus) est flottant (haute impédance).

Le signal d'autorisation de sortie (aussi appelé « Output Enable ») est référencé oe_a et oe_b sur la figure 1 et oe sur la figure 2. Quand ce signal est à 1, la donnée sur le bus de sortie est celle lue dans la mémoire.

Le signal d'adresse (aussi appelé bus d'adresse) est référencé addr_a et addr_b sur la figure 1 et addr sur la figure 2. Il est utilisé pour adresser l'emplacement à écrire ou à lire pendant les cycles d'écriture/lecture.

Le signal de données d'entrée (aussi appelé « Data Input bus », ou bus d'entrée) est référencé di_a et di_b sur la figure 1 et di sur la figure 2. Il est utilisé pour écrire une donnée à l'adresse spécifiée par le bus d'adresse.

Le signal d'autorisation de mémoire (aussi appelé « Memory Enable ») est référencé me_a et me_b sur la figure 1 et me sur la figure 2. Quand ce signal est à 1, la mémoire est active et des accès d'écriture/lecture peuvent être faits.

Le signal d'autorisation d'écriture (aussi appelé « Write Enable ») est référencé we_a et we_b sur la figure 1 et we sur la figure 2. Quand il est à 1 et que la mémoire est activée (me à 1), il s'agit d'une opération d'écriture. Quand il est à 0 et que la mémoire est activée (me à 1), il s'agit d'une lecture.

Le signal d'horloge (aussi appelé «Clock ») est référencé clk_a et clk_b sur la figure 1 et clk sur la figure 2. C'est l'horloge de la mémoire. Les accès sont effectués sur le front montant de cette horloge.

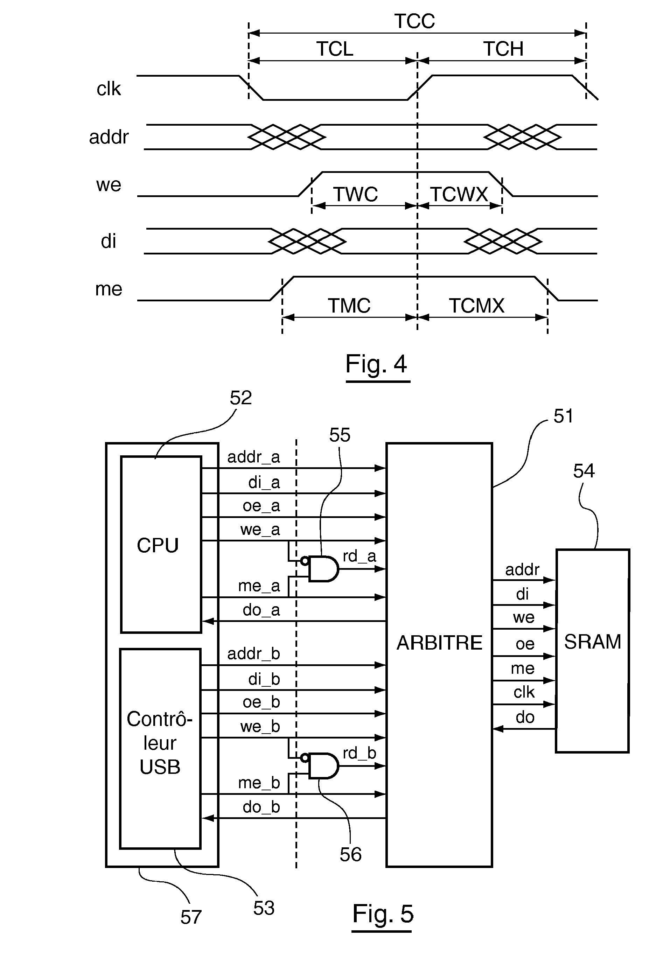

La **figure 3** présente les chronogrammes des signaux d'entrée/sortie d'une mémoire SPRAM, lors d'un accès en lecture. La **figure 4** présente les chronogrammes des signaux d'entrée/sortie d'une mémoire SPRAM, lors d'un accès en écriture. Ces chronogrammes sont bien connus de l'homme du métier et ne sont donc pas décrits dans la présente description.

La **figure 5** illustre un premier mode de réalisation particulier de l'invention, dans lequel un dispositif d'arbitrage 51 permet d'interfacer un premier module 52 (« côté A ») et un second module 53 (« côté B ») avec une mémoire SRAM 54. Les premier et second modules sont par exemple respectivement la CPU et un bloc IP (par exemple un contrôleur USB) d'un microcontrôleur 57.

« Côté A », une porte ET référencée 55 possède une entrée inversée qui reçoit le signal we_a et une entrée non inversée qui reçoit le signal me_a. Elle permet de générer un signal de lecture rd_a. De même, « côté B », une porte ET référencée 56 possède une entrée inversée qui reçoit le signal we_b et une entrée non inversée qui reçoit le signal me_b. Elle permet de générer un signal de lecture rd_b.

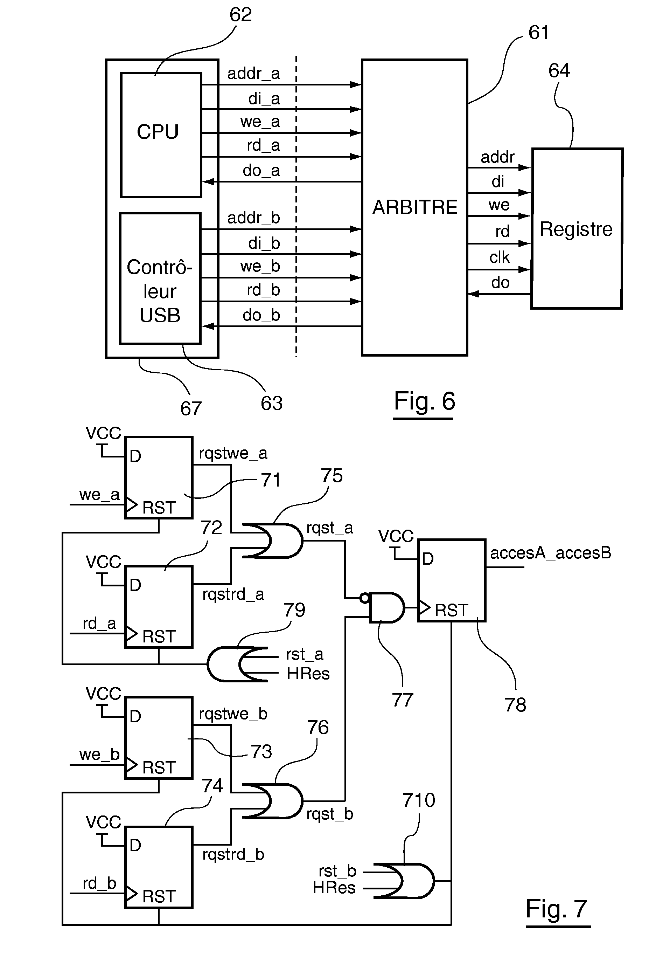

La **figure 6** illustre un second mode de réalisation particulier de l'invention, dans lequel un dispositif d'arbitrage 61 permet d'interfacer un premier module 62 (« côté A ») et un second module 63 (« côté B ») avec un registre 64. Le registre est par exemple réalisé sous la forme d'une bascule D numérique. Les premier et second modules sont par exemple respectivement la CPU et un bloc IP (par exemple un contrôleur USB) d'un microcontrôleur 67.

On notera que chacun des modules 62, 63 génère directement un signal de lecture rd_a, rd_b.

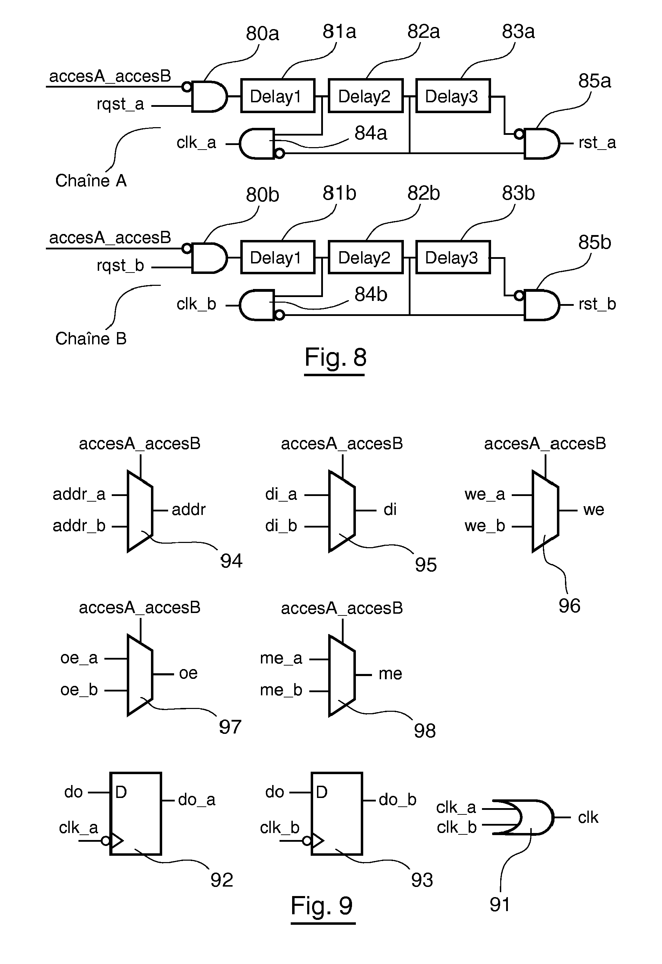

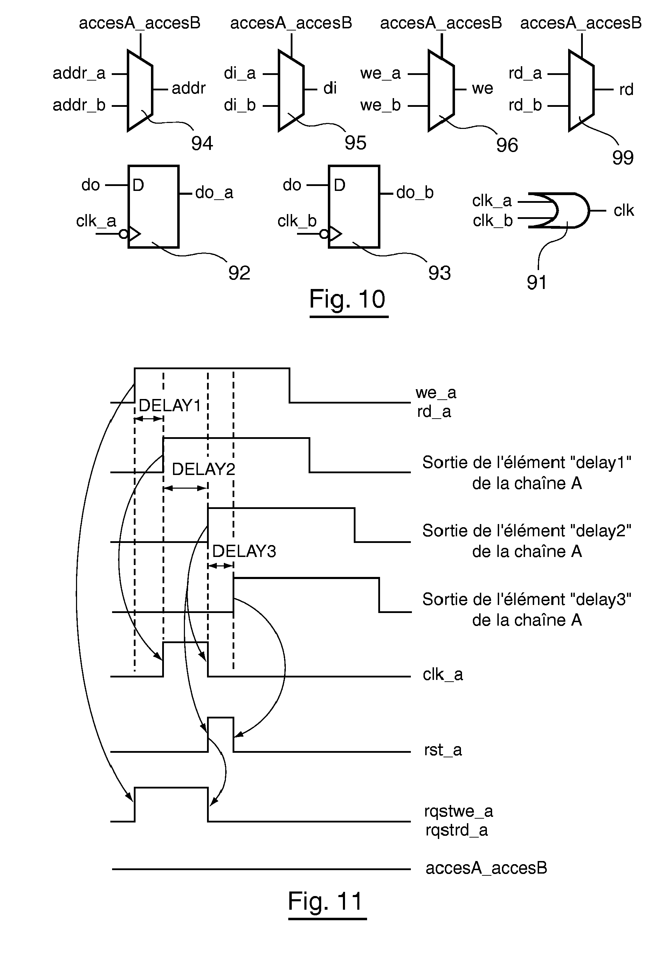

Dans la suite de la description, on présente un exemple de réalisation du dispositif d'arbitrage selon l'invention, dans lequel ce dernier comprend trois parties :
- une première partie (voir figure 7) permettant de détecter les requêtes d'écriture/lecture et génèrer le signal de sélection accesA_accesB, utilisé pour choisir entre une requête provenant du côté A, ou bien une requête provenant du côté B ;
- une deuxième partie (voir figure 8) permettant de générer l'horloge nécessaire pour effectuer un accès dans la SRAM, ainsi que les signaux de réinitialisation pour effacer la requête d'écriture/lecture, quand celle-ci aura été servie ; et
- une troisième partie (voir figures 9 et 10) permettant le multiplexage des signaux provenant des deux modules accédant à la même SRAM, pour générer les signaux de contrôle de la SRAM (me, oe, addr, di, do, etc).

On présente maintenant, en relation avec la **figure 7,** un mode de réalisation particulier de la première partie du dispositif d'arbitrage 51 selon l'invention, dans le contexte de la figure 5 (c'est-à-dire quand l'espace mémoire est réalisé avec une SRAM).

Cette première partie comprend :
- une bascule D référencée 71, dont l'entrée d'horloge reçoit le signal we_a provenant du premier module 52 ;
- une bascule D référencée 72, dont l'entrée d'horloge reçoit le signal rd_a obtenu par combinaison des signaux oe_a et me_a provenant du premier module 52 ;
- une bascule D référencée 73, dont l'entrée d'horloge reçoit le signal we_b provenant du second module 53 ;
- une bascule D référencée 74, dont l'entrée d'horloge reçoit le signal rd_b obtenu par combinaison des signaux oe_b et me_b provenant du second module 53 ;
- une porte OU référencée 75, recevant en entrée les signaux de sortie rqstwe_a et rqstrd_a des bascules référencées 71 et 72 ;
- une porte OU référencée 76, recevant en entrée les signaux de sortie rqstwe_b et rqstrd_b des bascules référencées 73 et 74 ;
- une porte ET référencée 77, dont une entrée inversée reçoit le signal de sortie rqst_a de la porte OU référencée 75 et une entrée non inversée reçoit le signal de sortie rqst_b de la porte OU référencée 76 ;
- une bascule D référencée 78, qui possède une entrée D à l'état « 1 » (VCC) et une entrée d'horloge recevant le signal de sortie de la porte ET référencée 77, et qui génère un signal de sortie accesA_accesB dont l'état initial est « 0 » et qui est appelé par la suite signal de sélection ;
- une porte OU référencée 79, recevant en entrée un premier signal de réinitialisation rst_a (voir figure 8) et un signal de réinitialisation matérielle HRes (aussi appelé « reset hardware »), et générant un signal permettant de réinitialiser les bascules référencées 71 et 72 ;
- une porte OU référencée 710, recevant en entrée un second signal de réinitialisation rst_b (voir figure 8) et le signal de réinitialisation matérielle HRes, et générant un signal permettant de réinitialiser les bascules référencées 73, 74 et 78.

Chacune des bascules référencées 71 à 74 possède une entrée D à l'état « 1 » et une sortie dont l'état initial est « 0 ».

Le fonctionnement de cette première partie est maintenant détaillé. Tout d'abord, le système est initialisé par le signal de réinitialisation matérielle : HRes = 1. La sortie de chacune des bascules référencées 71 à 74 et 78 bascule sera initialisée à 0. Donc, le signal accesA_accesB est à 0 par défaut, ce qui indique que, par défaut, l'accès sera donné au premier module 52 (côté A »).

Si une requête d'écriture/lecture arrive (we_a, rd_a, we_b ou re_b est à 1), cette requête est mémorisée par le signal rqstwe_a, rqstrd_a, rqstwe_b ou rqstrd_b. Ces signaux vont être effacés quand un rst_a, respectivement rst_b est à 1. On verra plus tard que ces deux signaux peuvent être générés uniquement à la fin de l'accès en cours.

Si une requête arrive du côté A (we_a ou rd_a est à 1), elle est mémorisée par l'un des signaux rqstwe_a ou rqstrd_a qui passe à 1. Le signal rqst_a va passer à 1. La porte ET référencée 77 ne va pas laisser passer ce signal, car son entrée est inversée. Donc, l'entrée horloge de la bascule référencée 78 reste toujours à 0. Le signal accesA_accesB reste toujours à 0, ce qui correspond à une sélection de l'accès A. Si le signal rst_a est à 1, les sorties rqstwe_a et rqstrd_a des deux bascules correspondantes, référencées 71 et 72, sont effacées. La porte ET référencée 77 va laisser passer le signal rqst_b.

Si une nouvelle requête arrive du côté A, on exécute de nouveau les pas de fonctionnement décrits ci-dessus.

Si une requête arrive du côté B (we_b ou rd_b est à 1), elle est mémorisée par l'un des signaux rqstwe_b ou rqstrd_b qui passe à 1. Le signal rqst_b va passer à 1. Comme la porte ET référencée 77 laisse passer ce signal, alors sur l'entrée horloge de la bascule référencée78 il y aura un front qui va faire passer le signal accesA_accesB à 1. Ce passage a comme impact la sélection du côté B pour effectuer un accès dans la SRAM 54. Si le signal rst_b est à 1, les sorties rqstwe_b et rqstrd_b des deux bascules correspondantes, référencées 73 et 74, sont effacées. De même, le signal accesA_accesB est effacé.

On peut donc remarquer que cette solution implémente la notion de priorité. Si des requêtes simultanées sont effectuées du côté A et B, la priorité est donnée au côté A. Quand cet accès est fini, le prochain accès servi sera celui provenant du côté B.

Dans l'exemple d'utilisation précité, où le premier module est la CPU, on a donc supposé que la CPU devait être plus prioritaire que le contrôleur USB (bloc IP) puisque c'est elle qui fait les accès de type A (connexion côté A de l'arbitre). Il est clair que si dans d'autres applications la CPU devait être moins prioritaire, il suffit de lui faire jouer le rôle du second module 53, afm qu'elle fasse les accès de type B (connexion côté B de l'arbitre). Dans ce cas, c'est le contrôleur USB qui serait le premier module et qui ferait des accès de type A.

On présente maintenant, en relation avec la **figure 8,** un mode de réalisation particulier de la deuxième partie du dispositif d'arbitrage 51 selon l'invention, dans le contexte de la figure 5 (c'est-à-dire quand l'espace mémoire est réalisé avec une SRAM).

Cette deuxième partie comprend deux chaînes, appelées chaîne A et chaîne B ci-après.

La chaîne A comprend :
- une porte ET référencée 80a, dont une entrée inversée reçoit le signal de sélection accesA_accesB et une entrée non inversée reçoit le signal de sortie rqst_a de la porte OU référencée 75 sur la figure 7 ;
- un premier élément de retard (aussi appelé « delay1 ») 81a, recevant en entrée le signal de sortie de la porte ET référencée 80a ;
- un deuxième élément de retard (aussi appelé « delay2 ») 82a, recevant en entrée le signal de sortie du premier élément de retard 81a;
- une porte ET référencée 84a, dont une entrée inversée reçoit le signal de sortie du deuxième élément de retard 82a et une entrée non inversée reçoit le signal de sortie du premier élément de retard 81a, et générant en sortie un premier signal d'horloge clk_a ;
- un troisième élément de retard (aussi appelé « delay3 ») 83a, recevant en entrée le signal de sortie du deuxième élément de retard 82a ;
- une porte ET référencée 85a, dont une entrée inversée reçoit le signal de sortie du troisième élément de retard 83a et une entrée non inversée reçoit le signal de sortie du deuxième élément de retard 82a, et générant en sortie le premier signal de réinitialisation rst_a.

La chaîne B comprend :
- une porte ET référencée 80b, dont une entrée inversée reçoit le signal de sélection accesA_accesB et une entrée non inversée reçoit le signal de sortie rqst_b de la porte OU référencée 76 sur la figure 7 ;
- un premier élément de retard (aussi appelé « delay1 ») 81b, recevant en entrée le signal de sortie de la porte ET référencée 80b ;
- un deuxième élément de retard (aussi appelé « delay2 ») 82b, recevant en entrée le signal de sortie du premier élément de retard 81b ;
- une porte ET référencée 84b, dont une entrée inversée reçoit le signal de sortie du deuxième élément de retard 82b et une entrée non inversée reçoit le signal de sortie du premier élément de retard 81b, et générant en sortie un deuxième signal d'horloge clk_b ;
- un troisième élément de retard (aussi appelé « delay3 ») 83b, recevant en entrée le signal de sortie du deuxième élément de retard 82b ;
- une porte ET référencée 85b, dont une entrée inversée reçoit le signal de sortie du troisième élément de retard 83b et une entrée non inversée reçoit le signal de sortie du deuxième élément de retard 82b, et générant en sortie le second signal de réinitialisation rst_b.

La deuxième partie du dispositif d'arbitrage 51 a comme fonction la génération de deux signaux d'horloge (clk_a, clk_b, dont la combinaison (voir figures 9 et 10) donne l'horloge clk pour la SRAM 54), ainsi que la génération des signaux de réinitialisation (rst_a, rst_b), quand l'accès est fmi.

On notera que seulement l'une des deux chaînes peut être exécutée à un instant donné. En effet, quand l'accès côté A est choisi (accesA_accesB = 0), la porte ET référencée 80a laisse passer la requête du côté A, tandis que la porte ET référencée 80b va bloquer la requête du côté B.

On décrit uniquement l'une des deux chaînes, l'autre ayant un fonctionnement similaire. Il faut se rapporter aux figures 3 et 4 pour comprendre le choix des différents éléments de délai.

Le premier élément de retard (« delay1 ») applique un retard DELAY1 permettant de respecter le temps TCL de l'horloge de la SRAM (phase basse (LOW) de l'horloge). On a donc : DELAY1 ≥ TCL.

Le deuxième élément de retard (« delay2 ») applique un retard DELAY2 permettant de respecter le temps TCQ (temps de maintien (« hold time ») de la mémoire SRAM). On a donc : DELAY2 ≥ TCQ. Ce temps est généralement plus grand que le TCC (période minimale de l'horloge), donc, le TCC, ainsi que le TCH sont forcément respectés.

Les premier et second éléments de retard appliquent ensemble un retard total cumulé supérieur ou égal à la période (TCC) minimale d'horloge avec laquelle peut fonctionner la SRAM. On a donc : DELAY1 + DELAY2 ≥ TCC.

On prend par exemple : DELAY1=1ns et DELAY2=6ns, dans le cas où TCC=7ns et TCQ=3ns.

Le troisième élément de retard (« delay3 ») applique un retard DELAY3 permettant de générer une impulsion de réinitialisation (reset pulse), qui efface la requête de lecture/écriture précédemment effectuée. Pour une implémentation hardware plus facile, le troisième élément de retard peut être le même que le premier élément de retard.

La **figure 11** présente des chronogrammes de signaux illustrant le traitement par le dispositif d'arbitrage selon l'invention, dans le contexte de la figure 5, d'une requête provenant du « côté A », c'est-à-dire du premier module 52. Comme souhaité, le premier signal d'horloge clk_a et le premier signal de réinitialisation rst_a présentent chacun une impulsion. La durée de l'accès est de : DELAY1 + DELAY2.

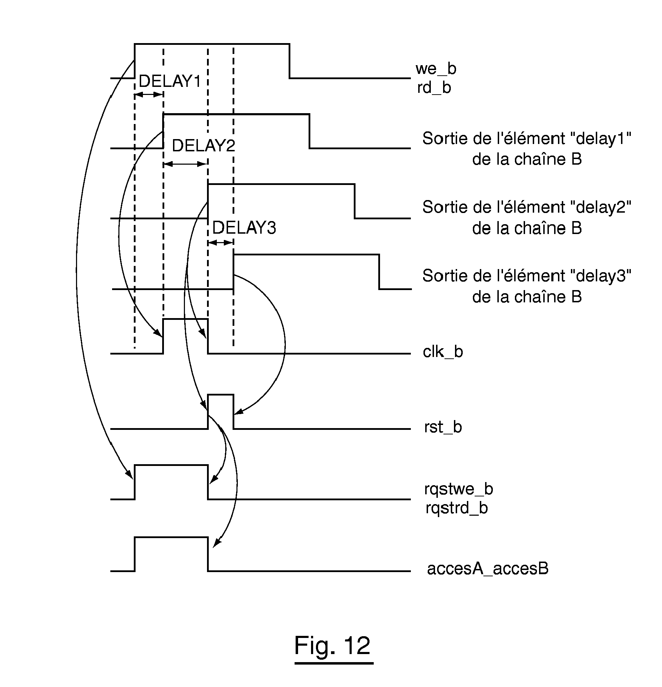

La **figure 12** présente des chronogrammes de signaux illustrant le traitement par le dispositif d'arbitrage selon l'invention, dans le contexte de la figure 5, d'une requête provenant du « côté B », c'est-à-dire du second module 53. Comme souhaité, le second signal d'horloge clk_b et le second signal de réinitialisation rst_b présentent chacun une impulsion. La durée de l'accès est de : DELAY1 + DELAY2.

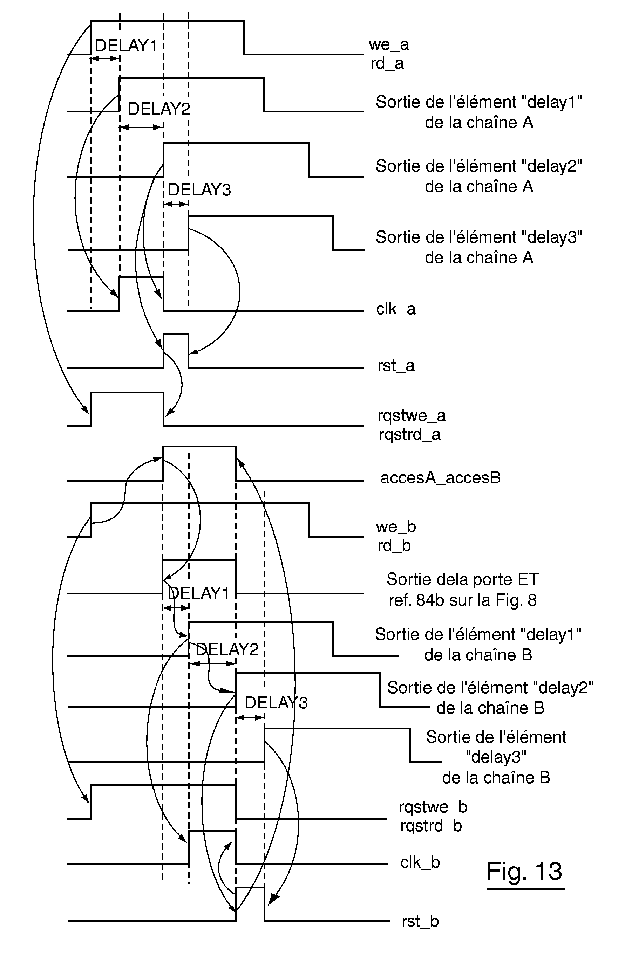

La **figure 13** présente des chronogrammes de signaux illustrant le traitement par le dispositif d'arbitrage selon l'invention, dans le contexte de la figure 5, de deux requêtes simultanées provenant des « côtés A et B », c'est-à-dire des premier et second modules 52, 53. Comme souhaité, le premier signal d'horloge clk_a et le premier signal de réinitialisation rst_a présentent chacun une impulsion, définissant un premier accès de durée (DELAY1 + DELAY2), puis le second signal d'horloge clk_b et le second signal de réinitialisation rst_b présentent chacun une impulsion, définissant un second accès de durée (DELAY1 + DELAY2).

On présente maintenant, en relation avec la **figure 9,** un mode de réalisation particulier de la troisième partie du dispositif d'arbitrage 51 selon l'invention, dans le contexte de la figure 5 (c'est-à-dire quand l'espace mémoire est réalisé avec une SRAM).

Cette troisième partie est chargée de générer les signaux de contrôle pour la SRAM. Elle comprend elle-même trois sous-parties.

Une première sous-partie comprend une porte OU référencée 91, recevant en entrée les premier et second signaux d'horloge clk_a, et clk_b (voir figure 8), et générant en sortie le signal d'horloge clk pour la SRAM 54 (voir figure 5).

Il est à noter que, dans une variante, la porte OU référencée 91 peut être remplacée par un multiplexeur. Toutefois, cette variante est moins performante car d'une part le temps de propagation est plus long et d'autre part car les signaux clk_a et clk_b sont générés uniquement quand une requête de lecture/écriture arrive et on ne peut donc pas avoir des impulsions sur le signal clk_a ou clk_b s'il n'y a pas de requête. La solution avec la porte OU permet d'éviter des écritures parasites et de limiter la consommation de la mémoire.

Une deuxième sous-partie comprend :
- une bascule D référencée 92, dont l'entrée D est destinée à recevoir le signal do (bus de sortie) de la SRAM, et dont l'entrée d'horloge reçoit le premier signal d'horloge (clk_a). Elle génère en sortie un signal do_a destiné au premier module 52 ;
- une bascule D référencée 93, dont l'entrée D est destinée à recevoir le signal do (bus de sortie) de la SRAM, et dont l'entrée d'horloge reçoit le second signal d'horloge (clk_b). Elle génère en sortie un signal do_b destiné au second module 53.

Ces bascules référencées 92 et 93 permettent de sauver la donnée lue dans la SRAM 54. Leur utilisation est nécessaire. Comme décrit précédemment, la donnée lue est maintenue sur le bus de sortie (do) de la SRAM tant que la SRAM est active (me = 1). Dans le cas présent, quand l'accès est fini, on désactive la SRAM pour limiter la consommation. Sans bascule, la donnée lue serait ainsi perdue à la fin des signaux rd_a ou rd_b. Or, c'est justement à ce moment que les modules qui ont lancé cette requête de lecture vont prendre en compte cette donnée. C'est donc la raison pour laquelle une bascule (ou plus précisément un banc de registres) est ajoutés à la sortie de la SRAM. Il y a un banc de registres pour le côté A et un pour le côté B. La largeur de l'horloge clk_a et clk_b (DELAY2) a été judicieusement choisie pour respecter le temps de maintien TCQ (hold time) de la SRAM. Donc, sur le front descendant de ces horloges, la donnée sur le bus de sortie (do) de la SRAM est valide. On peut donc utiliser ce front descendant pour sauvegarder cette donnée dans le registre correspondant. Ainsi, si un accès de type A est en cours, la clk_a est générée. Sur le front descendant de cette horloge, la donnée de sortie de la SRAM est sauvegardée dans la bascule do_a. De même, si un accès de type B est en cours, la clk_b est générée. Sur le front descendant de cette horloge, la data de sortie de la SRAM est sauvegardée dans la bascule do_b.

Une troisième sous-partie comprend :
- un multiplexeur référencé 94, recevant en entrée les signaux addr_a et addr_b provenant des premier et second modules 52, 53 (voir figure 5), et commandé par le signal de sélection accesA_accesB (voir figure 7) pour générer en sortie le signal addr pour la SRAM 54 (voir figure 5). Si le signal accesA_accesB est à 0, on sélectionne le signal addr_a provenant du côté A. Si le signal accesA_accesB est à 1, on sélectionne le signal addr_b provenant du côté B ;
- un multiplexeur référencé 95, recevant en entrée les signaux di_a et di_b provenant des premier et second modules, et commandé par le signal de sélection accesA_accesB pour générer en sortie le signal di pour la SRAM. Selon que le signal accesA_accesB est à 0 ou à 1, on sélectionne le signal di_a ou di_b ;
- un multiplexeur référencé 96, recevant en entrée les signaux we_a et we_b provenant des premier et second modules, et commandé par le signal de sélection accesA_accesB pour générer en sortie le signal we pour la SRAM. Selon que le signal accesA_accesB est à 0 ou à 1, on sélectionne le signal we_a ou we_b ;
- un multiplexeur référencé 97, recevant en entrée les signaux oe_a et oe_b provenant des premier et second modules, et commandé par le signal de sélection accesA_accesB pour générer en sortie le signal oe pour la SRAM. Selon que le signal accesA_accesB est à 0 ou à 1, on sélectionne le signal oe_a ou doe_b ;
- un multiplexeur référencé 98, recevant en entrée les signaux me_a et me_b provenant des premier et second modules, et commandé par le signal de sélection accesA_accesB pour générer en sortie le signal me pour la SRAM. Selon que le signal accesA_accesB est à 0 ou à 1, on sélectionne le signal me_a ou me_b.

La **figure 10** présente une variante du schéma de la figure 9, dans le contexte de la figure 6 (c'est-à-dire quand l'espace mémoire est réalisé avec un registre).

Cette variante se distingue du mode de réalisation de la figure 9 uniquement en ce que les multiplexeurs référencés 97 et 98, générant les signaux oe et me respectivement, sont remplacés par un multiplexeur référencé 99, générant le signal rd (voir figure 6).

Ce multiplexeur référencé 99, reçoit en entrée les signaux rd_a et rd_b provenant des premier et second modules, et est commandé par le signal de sélection accesA_accesB pour générer en sortie le signal rd pour la SRAM. Selon que le signal accesA_accesB est à 0 ou à 1, on sélectionne le signal rd_a ou rd_b.

## Revendications

1. Dispositif d'arbitrage (51 ; 61), destiné à être connecté entre d'une part un premier (52 ; 62) et un second module (53 ; 63) et d'autre part des moyens de mémorisation (54 ; 64) formant un espace mémoire, **caractérisé en ce qu'**il comprend :
- des moyens (71 à 74) de détection d'une ou plusieurs requêtes provenant, simultanément ou non, des premier et second modules en vue de l'accès à l'espace mémoire ;
- des moyens (75 à 78) de sélection, générant un signal de sélection (accesA_accesB) prenant :
* un premier état, par défaut ou si une requête détectée seule provient du premier module ou encore si deux requêtes sont détectées simultanément ;
* un second état, si une requête détectée seule provient du second module ou si l'une de deux requêtes détectées simultanément a déjà été servie ;
- des premiers moyens d'horloge (80a, 81a, 82a, 84a), activés si le signal de sélection prend le premier état, et générant un premier signal d'horloge (clk_a) permettant aux moyens de mémorisation de servir une requête provenant du premier module ;
- des premiers moyens de réinitialisation (80a, 81a, 82a, 83a, 84a, 85a), activés si le signal de sélection prend le premier état, et générant un premier signal de réinitialisation (rst_a) permettant d'effacer une requête provenant du premier module après qu'elle a été servie ;
- des seconds moyens d'horloge (80b, 81b, 82b, 84b), activés si le signal de sélection prend le second état, et générant un second signal d'horloge (clk_b) permettant aux moyens de mémorisation de servir une requête provenant du second module ;
- des seconds moyens de réinitialisation (80b, 81b, 82b, 83b, 84b, 85b), activés si le signal de sélection prend le second état, et générant un second signal de réinitialisation (rst_b), permettant d'effacer une requête provenant du second module après qu'elle a été servie.

2. Dispositif selon la revendication 1, **caractérisé en ce que** les moyens de mémorisation comprennent au moins une mémoire SRAM (54).

3. Dispositif selon la revendication 1, **caractérisé en ce que** les moyens de mémorisation comprennent au moins un registre (64).

4. Dispositif selon l'une quelconque des revendications 1 à 3, **caractérisé en ce que** les moyens de détection comprennent :
- une première bascule D (71), dont l'entrée d'horloge reçoit un signal d'autorisation d'écriture (we_a) provenant du premier module ;
- une deuxième bascule D (72), dont l'entrée d'horloge reçoit un signal de lecture (rd_a) provenant du premier module, ou obtenu par combinaison d'un signal d'autorisation de sortie (oe_a) et un signal d'autorisation de mémoire (me_a) provenant du premier module ;
- une troisième bascule D (73), dont l'entrée d'horloge reçoit un signal d'autorisation d'écriture (we_b) provenant du second module ;
- une quatrième bascule D (74), dont l'entrée d'horloge reçoit un signal de lecture (rd_b) provenant du second module, ou obtenu par combinaison d'un signal d'autorisation de sortie (oe_b) et un signal d'autorisation de mémoire (me_b) provenant du second module ;
et **en ce que** le premier signal de réinitialisation (rst_a) permet de réinitialiser les première et deuxième bascule, et le second signal de réinitialisation (rst_b) permet de réinitialiser les troisième et quatrième bascules.

5. Dispositif selon la revendication 4, **caractérisé en ce que** chacune des première, deuxième, troisième et quatrième bascules possède une entrée D à l'état « 1 » et une sortie non inversée dont l'état initial est « 0 », ou possède une entrée D à l'état « 0 » et une sortie inversée dont l'état initial après inversion est « 0 »,
**en ce que** les moyens de sélection comprennent :
- une première porte OU (75), recevant en entrée les signaux de sortie des première et deuxième bascules ;
- une deuxième porte OU (76), recevant en entrée les signaux de sortie des troisième et quatrième bascules ;
- une première porte ET (77) dont une entrée inversée reçoit le signal de sortie de la première porte OU et une entrée non inversée reçoit le signal de sortie de la deuxième porte OU ;
- une cinquième bascule D (78), dont l'entrée d'horloge reçoit le signal de sortie de la première porte ET, et qui possède une entrée D à l'état « 1 » et une sortie non inversée dont l'état initial est « 0 », ou possède une entrée D à l'état « 0 » et une sortie inversée dont l'état initial après inversion est « 0 », le signal de sortie de la cinquième bascule constituant ledit signal de sélection (accesA_accesB) dont les premier et second états sont « 0 » et « 1 » respectivement ;
et **en ce que** le second signal de réinitialisation (rst_b) permet de réinitialiser la cinquième bascule.

6. Dispositif selon l'une quelconque des revendications 1 à 5, **caractérisé en ce que** les premiers, respectivement seconds, moyens d'horloge comprennent :
- une porte de filtrage (80a ; 80b) qui, à la condition que le signal de sélection (accesA_accesB) prenne le premier, respectivement second, état, laisse passer un signal de requête (rqst_a, rqst_b) prenant l'état « 1 » pour indiquer qu'une requête provenant du premier, respectivement second, module a été détectée ;
- un premier élément de retard (81a ; 81b), recevant en entrée le signal de sortie de la porte de filtrage ;
- un deuxième élément de retard (82a ; 82b), recevant en entrée le signal de sortie du premier élément de retard ;
- une deuxième porte ET (84a ; 84b) dont une entrée inversée reçoit le signal de sortie du deuxième élément de retard et une entrée non inversée reçoit le signal de sortie du premier élément de retard, et générant en sortie ledit premier, respectivement second, signal d'horloge (clk_a, clk_b).

7. Dispositif selon la revendication 6, **caractérisé en ce que** les premiers, respectivement seconds, moyens de réinitialisation partagent ladite porte de filtrage et lesdits premier et deuxième éléments de retard avec les premiers, respectivement seconds, moyens d'horloge,
et **en ce que** les premiers, respectivement seconds, moyens de réinitialisation comprennent en outre :
- un troisième élément de retard (83a ; 83b), recevant en entrée le signal de sortie du deuxième élément de retard ;
- une troisième porte ET (85a ; 85b) dont une entrée inversée reçoit le signal de sortie du troisième élément de retard et une entrée non inversée reçoit le signal de sortie du deuxième élément de retard, et générant en sortie ledit premier, respectivement second, signal de réinitialisation (rst_a, rst_b).

8. Dispositif selon l'une quelconque des revendications 6 et 7, **caractérisé en ce que** les premier et second éléments de retard appliquent ensemble un retard total cumulé supérieur ou égal à la période (TCC) minimale d'horloge avec laquelle peuvent fonctionner les moyens de mémorisation.

9. Dispositif selon l'une quelconque des revendications 6 à 8, **caractérisé en ce que** le second élément de retard applique un retard supérieur ou égal au temps de maintien (TCQ) avec lequel peuvent fonctionner les moyens de mémorisation.

10. Dispositif selon l'une quelconque des revendications 1 à 9, **caractérisé en ce qu'**il comprend en outre une troisième porte OU (91), recevant en entrée les premier et second signaux d'horloge (clk_a, clk_b), et générant en sortie un troisième signal d'horloge (clk) pour les moyens de mémorisation.

11. Dispositif selon l'une quelconque des revendications 1 à 10, **caractérisé en ce qu'**il comprend en outre :
- une sixième bascule D (92), dont l'entrée D est destinée à recevoir un premier signal de données de sortie (do) provenant des moyens de mémorisation, et dont l'entrée d'horloge reçoit le premier signal d'horloge (clk_a), et qui génère en sortie un second signal de données de sortie (do_a) destiné au premier module ;
- une septième bascule D (93), dont l'entrée D est destinée à recevoir ledit premier signal de données de sortie (do) provenant des moyens de mémorisation, et dont l'entrée d'horloge reçoit le second signal d'horloge (clk_b), et qui génère en sortie un troisième signal de données de sortie (do_b) destiné au second module.

12. Dispositif selon l'une quelconque des revendications 1 à 11, **caractérisé en ce qu'**il comprend en outre au moins un moyen de multiplexage (94 à 98), chaque moyen de multiplexage étant tel que :
- il permet de fournir un signal de contrôle distinct aux moyens de mémorisation ;
- il reçoit en entrée un premier signal de contrôle provenant du premier module et un second signal de contrôle provenant du second module ;
- il est commandé par ledit signal de sélection (accesA_accesB) de sorte que :
* si le signal de sélection prend le premier état, le moyen de multiplexage génère en sortie ledit premier signal de contrôle ;
* si le signal de sélection prend le second état, le moyen de multiplexage génère en sortie ledit second signal de contrôle.

13. Dispositif selon la revendication 12, **caractérisé en ce que** ledit signal de contrôle appartient au groupe comprenant :
- un signal d'adresse (addr) ;
- un signal de données d'entrée (di) ;
- un signal d'autorisation d'écriture (we) ;
- un signal d'autorisation de sortie (oe) ;
- un signal d'autorisation de mémoire (me) ;
- un signal de lecture (rd).

14. Dispositif selon l'une quelconque des revendications 1 à 13, **caractérisé en ce que** les premier et second modules sont respectivement une unité centrale (CPU) et un bloc IP d'un microcontrôleur (57 ; 67).

15. Microcontrôleur (57 ; 67) **caractérisé en ce qu'**il comprend un dispositif d'arbitrage selon l'une quelconque des revendications 1 à 14.
